Europäisches Patentamt

European Patent Office

Office européen des brevets

(19)

(11) EP 0 614 940 B1

(12) EUROPEAN PATENT SPECIFICATION

(45) Date of publication and mention
of the grant of the patent:
18.11.1998 Bulletin 1998/47

(51) Int Cl.⁶: C08L 23/16, C08F 255/06,
C08F 8/46, C08F 8/30

(21) Application number: 94103868.9

(22) Date of filing: 07.04.1989

(54) **Thermoplastic elastomer composition having excellent paint adhesion**

Lackierfähige Elastomere Zusammensetzung

Composition à base de résine d'élastomère thermoplastic ayant une excellente adhésion à la peinture

(84) Designated Contracting States:
AT BE CH DE ES FR GB GR IT LI LU NL SE

(30) Priority: 08.04.1988 JP 84991/88
08.04.1988 JP 84992/88
08.04.1988 JP 84993/88
24.05.1988 JP 124891/88

(43) Date of publication of application:
14.09.1994 Bulletin 1994/37

(62) Document number(s) of the earlier application(s) in
accordance with Art. 76 EPC:
89303476.9 / 0 336 780

(73) Proprietor: MITSUI CHEMICALS, INC.
Tokyo (JP)

(72) Inventors:
• Maeda, Toshiyuki, c/o Mitsui Petrochemical
Ichihara-shi, Chiba-ken (JP)
• Otawa, Yasuhiko, c/o Mitsui Petrochemical
Ichihara-shi, Chiba-ken (JP)
• Okamoto, Katsuo, c/o Mitsui Petrochemical
Ichihara-shi, Chiba-ken (JP)

(74) Representative: Cresswell, Thomas Anthony
J.A. KEMP & CO.
14 South Square
Gray's Inn
London WC1R 5LX (GB)

(56) References cited:
EP-A- 0 002 286

• PATENT ABSTRACTS OF JAPAN vol. 8, no. 114
(C-225)(1551) 26 May 1984 & JP-A-59 027 935
(MITSUI SEKIYU KAGAKU KOGYO KK) 14
February 1984

**Description**

The present invention relates to a thermoplastic elastomer composition which has excellent paint adhesion and excellent bondability to, for example, a metal and which has excellent rubbery elasticity, moldability and heat resistance, and to a process for preparing said composition.

It has been known that a thermoplastic elastomer is a cured rubber substitute of the energy-saving and resource-saving type.

As the thermoplastic elastomer of this type, there is known, for example, an olefin type thermoplastic elastomer composed mainly of an ethylene/propylene/uncojugated diene copolymer rubber. Although this elastomer has excellent performances as a thermoplastic elastomer, the paint adhesion and the bondability to various resins or metals are insufficient, and therefore the application range of this thermoplastic elastomer is extremely restricted.

An attempt has been made to improve the bondability of this thermoplastic elastomer by modifying the above-mentioned rubber component with, for example, maleic anhydride. However, in this case, characteristics such as the rubbery elasticity and moldability are drastically degraded, though the bondability is improved.

JP-A-5927935 relates to a thermoplastic elastomer composition having good bondability to polyurethane foams comprising 25-200 pts/wt of a polyolefin resin blended with 100 pts/wt of a mixture consisting of a partially crosslinked ethylene/$\alpha$-olefin copolymer rubber and an ethylene/$\alpha$-olefin copolymer rubber having carboxyl groups or its anhydride groups.

Even at present, the paint adhesion and the bondability to various resins or metals are similarly insufficient in thermoplastic resins such as polyolefins.

Namely, a thermoplastic resin or elastomer which not only has excellent rubbery elasticity and moldability characteristics but also excellent paint adhesion and bondability to various resins and metals is not known.

A polyvinyl chloride sheet having on the surface a leather pattern formed by embossing the surface and boarding the embossed surface has been heretofore used for interior automotive trims such as a floor, a wall and a roof.

However, since a plasticizer is incorporated in polyvinyl chloride per se, this polyvinyl chloride sheet is defective in that the surface becomes soft and sticky, and, by evaporation of the plasticizer, the sheet is made rigid or the atmosphere in an automobile becomes blurred.

A laminate formed by backing a polyvinyl chloride sheet with a formed layer and, if necessary, further with a resin aggregate layer has been used instead of a single-layer sheet of polyvinyl chloride.

This laminate is prepared by the following steps.

(1) Soft polyvinyl chloride is calendered to form a sheet.
(2) A mixture of a polyol and a polyisocyanate is coated on the surface of this sheet and a urethane treatment is carried out to attain a delustering effect.
   This delustering treatment is performed to prevent the sheet surface from becoming lustrous at the heat-molding step (7) described hereinafter.
(3) The sheet is subjected to an embossing treatment to form a boarded leather pattern on the surface.
(4) The back surface of the sheet having the embossed surface is subjected to a flame treatment and is molten, and a sheet of a polyurethane foam separately supplied is press-bonded to the molten back surface of the sheet by means of a roll.
(5) An adhesive layer is formed on the polyurethane foam sheet side of the formed laminate comprising the polyvinyl chloride sheet and the polyurethane foam sheet.
(6) A resin aggregate having a predetermined shape is formed by a heat-forming method such as vacuum forming or air-pressure forming.
(7) The polyvinyl chloride sheet/polyurethane foam sheet laminate is preliminarily heated and placed on the resin aggregate formed body, and the assembly is heat-molded and integrated.

As is apparent from the foregoing description, the conventional laminate to be used for interior automotive trims is defective in that the preparation steps are much complicated.

Furthermore, this laminate comprises a soft polyvinyl chloride sheet containing a plasticizer. As pointed out above, the laminate is disadvantageous in that the surface is soft and sticky and the atmosphere in an automobile becomes blurred.

We have researched with a view to solving the foregoing problems involved in the conventional techniques and providing a thermoplastic elastomer composition having excellent paint adhesion and excellent heat bondability to various resins and metals and also having excellent rubbery elasticity, moldability and heat resistance.

More specifically, in accordance with the present invention, there is provided a thermoplastic elastomer composition which is obtainable by a process comprising dynamically heat-treating, in the presence of an organic peroxide, a blend comprising 100 parts by weight in total of components (a) and (b) with (d) wherein

component (a) is a peroxide-crosslinkable olefin-type copolymer
component (b) is an olefin-type plastic
and component (d) is 0.01 to 10 parts by weight of monomer containing at least one amino group.

In a preferred embodiment the composition is obtainable by dynamically heat treating, in the presence of an organic peroxide, a blend of 100 parts by weight of components (a) and (b) with component (d) and blending under heat the dynamically heat treated product with component. (c) which is 0.01 to 10 parts by weight of an unsaturated carboxylic acid or an ester or anhydride thereof.

In accordance with the present invention there is also provided a process for producing a thermoplastic resin composition which process comprises dynamically heat-treating, in the presence of an organic peroxide, a blend comprising 100 parts by weight in total of components (a) and (b) with component (d).

The blend to be dynamically heat-treated may further comprise at least one additive selected from the group consisting of (e) 0.01 to 100 parts by weight of a peroxide noncrosslinkable rubbery substance, (f) 0.01 to 200 parts by weight of a mineral oil type softener and (g) 0.01 and 100 parts by weight of a fibrous filler, per 100 parts by weight of the total amount of components (a) and (b).

The most important technical characteristic of the thermoplastic elastomer composition of the present invention resides in that the respective components are dynamically heat-treated in the presence of an organic peroxide.

This thermoplastic elastomer composition has excellent paint adhesion and excellent heat bondability to various resins and metals and has excellent rubbery elasticity, moldability and heat resistance.

In the thermoplastic elastomer composition of the present invention, the peroxide-crosslinkable olefin type copolymer rubber component (a) imparts a rubbery elasticity to the resulting composition. A partially crosslinked copolymer rubber has excellent heat resistance.

The olefin type plastic component (b) imparts flowability at a high temperature, whereby a desired moldability is retained by the elastomer.

The unsaturated carboxylic acid, ester or anhydride component (c) improves the heat bondability to various resins and metals, and the monomer containing at least one amino group in the molecule chain component (d) drastically improves the paint adhesion and also improves the bondability to a polyurethane layer.

The peroxide-noncrosslinkable rubbery substance component (e) and the mineral oil type softener component (f) improve the flowability of the rubber composition and impart a moldability, as well as the olefin type plastic component (b), and the fibrous filler component (g) imparts a dimension stability (small linear expansion coefficient) and a shape stability (appropriate rigidity) to the composition.

Components (e), (f) and (g) can be incorporated before or during the heat treatment of the composition.

In the thermoplastic elastomer composition, by the actions of the above-mentioned respective components, the paint adhesion and the heat bondability to various resins and metals are prominently improved while the desired rubbery elasticity, heat resistance and moldability are retained. If the fibrous filler is incorporated, improvement of the dimension stability and shape stability can be attained in addition to the above-mentioned effect.

The components of the thermoplastic elastomer composition of the present invention will now be described in more detail.

(a) Peroxide-crosslinkable olefin type copolymer rubber

The peroxide crosslinkable olefin type copolymer rubber used in the present invention is an amorphous elastic copolymer composed mainly of an olefin, such as an ethylene/propylene copolymer rubber, an ethylene/propylene/ unconjugated diene rubber or an ethylene/butadiene copolymer rubber, and when this rubber is mixed with an organic peroxide and the mixture is kneaded under heating, the rubber is crosslinked and the flowability is reduced or the flowability is lost. Examples of the uncojugated diene are dicyclopentadiene, 1,4-hexadiene, dicyclooctadiene, methylenenorbornene and ethylidenenorbornene.

Preferred copolymer rubbers are ethylene/propylene copolymer rubbers and ethylene/propylene/unconjugated rubbers in which the molar ratio of ethylene units to propylene units (ethylene/propylene) is from 50/50 to 90/10, especially from 55/45 to 85/15. Ethylene/propylene/unconjugated copolymer rubbers, particularly an ethylene/propylene/ 5-ethylidene-2-norbornene copolymer rubber and an ethylene/propylene/5-ethylidene-2-norbornene/dicyclopentadiene quadripolymer, are especially preferred because a thermoplastic elastomer having excellent heat resistance, tensile characteristics and repulsive elasticity is obtained.

It is preferred that the Mooney viscosity $ML_{1+4}$ (100°C) of the copolymer rubber is 10 to 150, especially 40 to 120. If the Mooney viscosity of the copolymer rubber is within this range, an elastomer composition having excellent tensile characteristics and flowability is obtained.

It also is preferred that the iodine value (unsaturation degree) of the copolymer rubber is less than 16. If the iodine value is within this range, a thermoplastic elastomer which has well-balanced flowability and rubbery characteristics is obtained.

(b) Olefin type plastic

The olefin type plastic used in the present invention is a crystalline high-molecular-weight solid product obtained by polymerizing at least one olefin by a high-pressure process or a low-pressure process. As an instance of this resin, there can be mentioned a homopolymer or copolymer resin of at least one isotactic or syndiotactic monoolefin. Typical resins are commercially available.

As the starting olefin, there are appropriately used, for example, ethylene, propylene,1-butene, 1-pentene, 1-hexane, 2-methyl-1-propane, 3-methyl-1-pentene, 4-methyl-1-pentene, 5-methyl-1-hexane, 1-octene, 1-decene and mixtures of two or more of these olefins. As the polymerization form, either random polymerization or block polymerization can be adopted, so far as a resinous product is obtained.

A peroxide-separating olefin type plastic and polyethylene are especially preferred as the olefin type plastic.

By the peroxide-separating olefin type plastic is meant an olefin type plastic characterized in that when it is mixed with a peroxide and the mixture is kneaded under heating, the plastic is thermally decomposed to reduce the molecular weight and the flowability of the resin is increased. For example, there can be mentioned isotactic polypropylene and copolymers of propylene with small amounts of other α-olefins, such as a propylene/ethylene copolymer, a propylene/1-butene copolymer, a propylene/1-hexene copolymer and a propylene/4-methyl-1-pentene copolymer. It is preferred that the melt flow rate (ASTM D-1238-65T, 230°C) of the olefin type plastic used in the present invention is 0.1 to 50, especially 5 to 20. In the present invention, the olefin type plastic improves the flowability and heat resistance of the composition.

(c) Unsaturated carboxylic acid or an ester or anhydride thereof

As the unsaturated carboxylic acid, ester or anhydride component (c) there can be mentioned α,β-unsaturated carboxylic acids such as acrylic acid, methacrylic acid, maleic acid, fumaric acid, itaconic acid, citraconic acid and tetrahydrophthalic acid, unsaturated carboxylic acids such as bicyclo[2,2,1]hepto-2-ene-5,6-dicarboxylic acid, α,β-unsaturated carboxylic anhydrides such as maleic anhydride, itaconic anhydride, citraconic anhydride and tetrahydrophthalic anhydride, unsaturated carboxylic anhydrides such as bicyclo[2,2,1]hepto-2-ene-5,6-dicarboxylic anhydride, and unsaturated carboxylic acid esters such as methyl acrylate, methyl methacrylate, dimethyl maleate, monomethyl maleate, diethyl fumerate, dimethyl itaconate, diethyl citraconate, dimethyl tetrahydrophthalate anhydride and dimethyl bicyclo[2,2,1]hepto-2-ene-5,6-dicarboxylate. Of these acids and derivatives, maleic acid, bicyclo[2,2,1]hepto-2-ene-5,6-dicarboxylic acid and anhydrides thereof are preferred. Component (c) improves the bondability of the composition.

(d) Monomer containing at least one amino group

As the monomer containing at least one amino group in the molecule chain component (d), there can, for example, be mentioned amino alcohols such as 2-aminoethanol, 3-amino-1-propanol, 4-amino-1-butanol, 5-amino-1-pentanol, 2-amino-1-butanol, 2-amino-2-methyl-1-propanol, 2-amino-2-methyl-1,3-propanediol, 2-amino-2-ethyl-1,3-propanediol and N-aminoethylethanolamine, diamines such as ethylenediamine, propylenediamine, trimethyldiamine, tetramethylenediamine, pentamethylenediamine and hexamethylenediamine, polyamines such as diethylenetriamine, triethylenetetramine and tetraethylenepentamine, dicarboxylic acid amides such as oxamide, malonamide, succinamide, adipamide, malamide and d-tartramide, hydrazines such as methylhydrazine and ethylhydrazine, and aromatic amines such as phenylenediamine, toluenediamine, N-methylphenylenediamine, aminodiphenylamine and diaminodiphenylamine.

Component (d) improves the paint adhesion to the elastomer composition.

Among the foregoing monomers, aminoalcohols and polyamines are preferred, and N-aminoethylethanolamine and triethylenetetramine are especially preferred.

If a blend of the thermoplastic elastomer with component (d) is heat-treated, the bondability of the obtained thermoplastic elastomer to a polyurethane is highly improved.

(e) Peroxide-noncrosslinkable rubbery substance

The peroxide-noncrosslinkable rubbery substance used in the present invention is a hydrocarbon rubbery substance characterized in that even if the rubbery substance is mixed with a peroxide and the mixture is kneaded under heating, the flowability is not reduced. For example, there can be mentioned polyisobutylene, butyl rubber (IIR), a propylene/ethylene copolymer rubber having a propylene content of at least 70 mole% and atactic polypropylene. In view of the performance and handling easiness, polyisobutylene and butyl rubber (IIR) are preferred.

Component (e) improves the flowability of the elastomer composition, and a rubbery substance having a Mooney viscosity lower than 60 is especially preferred.

Furthermore, component (e) improves the permanent set of the thermoplastic elastomer composition.

(f) <u>Mineral oil type softener</u>

The mineral oil type softener used as component (f) is a high-boiling-point petroleum faction which is ordinarily used for roll-processing of a rubber to weaken the intermolecular force of the rubber and facilitate the processing and which assists dispersion of an incorporated filler such as carbon black or white carbon or reduces the hardness of a cured rubber to increase the softness and elasticity. This petroleum fraction is divided into a paraffinic fraction, a naphthenic fraction and an aromatic fraction.

(g) <u>Fibrous filler</u>

A fibrous filler having a diameter of about 0.1 to about 15 µm and a length of about 5 µm to about 10 mm is preferably used as component (g) in the present invention. As specific examples, there can be mentioned a glass fiber (for example chopped strand, roving, milled glass fiber or glass flake), wollastonite, a cut fiber, a rock fiber, a microfiber, a processed mineral fiber, a carbon fiber, a gypsum fiber, an aromatic polyamide fiber and a potassium titanate fiber. A milled glass fiber, a glass flake and a potassium titanate fiber are preferred. In order to improve the wettability of the fibrous filler with the thermoplastic elastomer as the matrix, use of a fibrous filler treated with a coupling agent such as a silane coupling agent, a chromium coupling agent or a titanium coupling agent is especially preferred.

The fibrous filler can be added at the grafting step or the subsequent step.

<u>Preparation of the thermoplastic elastomer composition</u>

100 to 10 parts by weight, preferably 95 to 10 parts by weight, especially preferably 95 to 40 parts by weight, of the peroxide-crosslinkable olefin type copolymer rubber (a) and 0 to 90 parts by weight, preferably 5 to 90 parts by weight, especially preferably 5 to 60 parts by weight, of the olefin type plastic (b) [the sum of components (a) and (b) is 100 parts by weight], and component, (d) and optionally component (c), are dynamically heat-treated as follows.

Components (a), (b) and (d) are dynamically heat-treated simultaneously in the presence of an organic peroxide and, optionally, component (c) is blended under heating into the obtained elastomer.

According to a preferred example of this embodiment, 100 parts by weight in total of component (a) and component (b) is blended with 0.01 to 10 parts by weight, preferably 0.1 to 5 parts by weight, of a monomer (d) having at least one amino group and the blend is dynamically heat-treated in the presence of an organic peroxide, and optionally, 0.01 to 10 parts by weight, preferably 0.1 to 5 parts by weight, of an unsaturated carboxylic acid anhydride (c) is blended under heating into 100 parts by weight of the thermoplastic elastomer. The heat-treatment is preferably carried out at a temperature of 140 to 250°C, and a thermoplastic elastomer composition having excellent characteristics can be obtained.

The elastomer composition of the present invention includes the following modification.

According to this modification, at least one of 0.01 to 100 parts by weight, preferably 5 to 100 parts by weight, especially preferably 5 to 50 parts by weight, of a peroxide-noncrosslinkable rubbery substance (e), 0.01 to 200 parts by weight, preferably 3 to 100 parts by weight, especially preferably 3 to 80 parts by weight, of a mineral oil type softener (f) and 0.01 to 100 parts by weight, preferably 1.0 to 100 parts by weight, especially preferably 4 to 35 parts by weight of a fibrous filler (g), per 100 parts by weight of the sum of components (a) and (b), is blended in the composition to be dynamically heat-treated, and the blend is dynamically heat-treated in the presence of an organic peroxide to effect partial crosslinking.

By incorporating component (a) in the above-mentioned amount, a composition which has excellent rubbery characteristics such as the rubbery elasticity and which has high flowability and moldability is obtained.

If components (b), (e) and (f) are incorporated in the above-mentioned amounts, a composition which has excellent rubbery characteristics such as the rubbery elasticity and which has high flowability and moldability is obtained.

Furthermore, by incorporating components (c) and (d) in the above-mentioned amounts, the paint adherence, the moldability and the heat bondability to resins or metals are highly improved. Moreover, if component (g) is incorporated in the above-mentioned amount, the flowability, dimension stability and shape stability are improved.

Additives can be incorporated in the thermoplastic elastomer composition of the present invention, so far as the paint adhesion, flowability (moldability), rubbery properties and heat bondability of the composition are not degraded. For example, fillers such as calcium carbonate, calcium silicate, clay, kaolin, talc, silica, diatomaceous earth, mica powder, alumina, barium sulfate, aluminum sulfate, calcium sulfate, basic magnesium carbonate, molybdenum disulfide, graphite, glass fibers, glass beads, <u>shirasu</u> balloons and carbon fibers, and colorants such as carbon black, titanium oxide, zinc flower, red iron oxide, ultramarine, prussian blue, azo pigment, nitroso pigment, lake pigment and phthalocyanine pigment can be incorporated.

Furthermore, in the present invention, known heat-resistant stabilizers such as phenol type, sulfite type, phenylalkane type, phosphite type and amine type stabilizers, aging-preventing agents, weathering agents, antistatic agents and lubricants such as metal soaps and waxes can be incorporated in amounts customarily incorporated into olefin type plastics or olefin type copolymer rubbers.

In the present invention, the blend of the above-mentioned components is dynamically heat-treated in the presence of an organic peroxide to effect partial crosslinking.

By the term "dynamic heat treatment" is meant kneading in the molten state.

In the present invention, as the organic peroxide, there can be used, for example, dicumyl peroxide, di-tert-butyl peroxide, 2,5-dimethyl-2,5-di-(tert-butylperoxy)hexane, 2,5-dimethyl-2,5-di-(tert-butylperoxy)hexine-3,1,3-bis(tert-butylperoxyisopropyl)benzene, 1,1-bis(tert-butylperoxy)-3,3,5-trimethylcyclohexane, n-butyl-4,4-bis(tert-butylperoxy) valerate, benzoyl peroxide, p-chlorobenzoyl peroxide, 2,4-dicyclobenzoyl peroxide, tert-butyl peroxybenzoate, tert-butyl perbenzoate, tert-butylperoxyisopropyl carbonate, diacetyl peroxide, lauroyl peroxide and tert-butylcumyl peroxide. In view of the smell and scorch stability, 2,5-dimethyl-2,5 di-(tert-butylperoxy)hexane, 2-5-dimethyl-2,5-di-(tert-butylperoxy)hexine-3, 1,3-bis(tert-butylperoxyisopropyl)benzene, 1,1-bis(tert-butylperoxy)-3,3,5-trimethylcyclohexane and n-butyl-4,4-bis(tert-butylperoxy)valerate are preferred, and 1,3-bis(tert-butylperoxyisopropyl)benzene is especially preferred.

The amount of organic peroxide incorporated is adjusted to 0.01 to 3% by weight, preferably 0.05 to 1% by weight, based on the sum or components (a), (b) and (c).

If the amount of organic peroxide incorporated is adjusted within the above-mentioned range, in the obtained thermoplastic elastomer, the heat resistance, tensile characteristics and rubbery properties such as elastic recovery and repulsive elasticity become satisfactory, and the moldability is improved.

In the present invention, at the partial crosslinking treatment with the above-mentioned organic peroxide, there can be used peroxy-crosslinking assistants such as sulfur, p-quinone dioxime, p,p'-dibenzoylquinone dioxide, N-methyl-4,4-dinitrosoaniline, nitrobenzene, diphenylguanidine and trimethylolpropane-N,N-m-phenylene dimaleimide, and polyfunctional vinyl monomers such as divinylbenzene, triallyl cyanurate, polyfunctional methacrylate monomers, e. g., ethylene glycol dimethacrylate, diethylene glycol dimethacrylate, polyethylene glycol dimethacrylate, trimethylolpropane trimethacrylate and allyl methacrylate, and vinyl butyrate and vinyl stearate. By addition of a compound as mentioned above, a uniform and mild reaction can be expected. In the present invention, use of divinylbenzene is especially preferred, because divinylbenzene is easy to handle and has a good compatibility with the olefin type rubber and olefin type plastic as the main components of the blend to be treated. Furthermore, since divinylbenzene has an organic peroxide-solubilizing action and acts as a dispersing assistant for the peroxide, the heat treatment effect is uniformalized and a composition which has well-balanced flowability and physical properties can be obtained. In the present invention, it is preferred that the above-mentioned crosslinking assistant or polyfunctional vinyl monomer is incorporated in an amount of 0.1 to 2% by weight, especially 0.3 to 1% by weight, based on the entire blend to be treated. In the case where the amount of the crosslinking assistant or polyfunctional vinyl monomer exceeds 2% by weight, when the amount of the organic peroxide is large, the crosslinking reaction is advanced and the flowability of the composition is degraded, or when the amount of the organic peroxide is small, the above-mentioned assistant or monomer is left as the unreacted monomer in the composition and the unreacted monomer changes the physical properties by the heat history during processing and molding of the composition. Accordingly, incorporation of the crosslinking assistant or polyfunctional vinyl monomer in an excessive amount should be avoided.

In the order to promote decomposition of the organic peroxide, a tertiary amine such as triethylamine, tributylamine or 2,4,6-tris(dimethylamino)phenol or a decomposition promoting agent such as a naphthenic acid salt of aluminium, cobalt, vanadium, copper, calcium, zirconium, manganese, magnesium, lead or mercury can be used.

It is preferred that kneading be carried out in a closed apparatus in an atmosphere of an inert gas such as nitrogen or carbon dioxide. The temperature is such that the half-value period of the organic peroxide used is within 1 minute. Namely, the temperature is 150 to 280°C, preferably 170 to 240°C. The kneading time is generally 1 to 20 minutes, preferably 1 to 10 minutes. The applied shearing force is ordinarily 10 to $10^4$ sec$^{-1}$, preferably $10^2$ to $10^3$ sec$^{-1}$, expressed as the shearing speed.

As the kneading apparatus, there can be used a mixing roll, an intensive mixer such as a Banbury mixer, and a single-screw or twin-screw extruder.

According to the present invention, by the above-mentioned dynamic heat treatment, an uncrosslinked, partially crosslinked or completely crosslinked and modified thermoplastic elastomer composition can be obtained.

In the present invention, by "uncrosslinked", it is meant that the gel content measured, for example, by the following method is lower than 10%, and by "partially, or completely crosslinked", it is meant that the gel content measured, for example, by the following method is at least 10%, especially at least 20%.

Measurement of gel content

A sample (100mg) of a thermoplastic elastomer is cut into a strip of 0.5 mm x 0.5 mm x 0.5 mm and immersed in 30 ml of cyclohexane at 23°C for 48 hours in a closed vessel. The sample is taken out on a filter paper and is dried at room temperature for more than 72 hours until the weight is constant.

The weight obtained by subtracting the weight of the cyclohexane-insoluble components (for example the fibrous filler, the filler and the pigment) other than the polymer component and the weight of the olefin type plastic component before the immersion in cyclohexane from the weight of the residue after the drying is designated as the "corrected final weight (Y)".

The weight of the peroxide-crosslinkable olefin type copolymer rubber in the sample, that is the weight obtained by subtracting (1) the cyclohexane-soluble components (for example, the mineral oil and the plasticizer) other than the peroxide-crosslinkable olefin type copolymer, (2) the olefin type plastic component and (3) the cyclohexane-insoluble components (for example the fibrous filler, the filler and the pigment) other than the polymer component from the weight of the sample is designated as the "corrected initial weight (X)".

The gel content is calculated according to the formula:

$$\text{Gel content (\% by weight)} = [\text{corrected final weight (Y)}]/[\text{corrected initial weight (X)}] \times 100$$

The thermoplastic elastomer of the present invention is obtained by blending the above-mentioned components at a specific ratio and dynamically heat-treating the blend in the presence of an organic peroxide. The composition has excellent mechanical characteristics, moldability, paint adhesion and bondability to resins and metals. The thermoplastic elastomer composition can be molded by an ordinary molding apparatus for thermoplastic resins and especially, the composition can be easily molded by extrusion molding, calender molding or injection molding.

The thermoplastic elastomer composition of the present invention has excellent in rubbery characteristics, moldability, paint adhesion, bondability to resins and metals, mechanical strength, heat resistance and softness, and the composition can be molded by a known molding apparatus for ordinary thermoplastic plastics and is especially suitable for extrusion molding, calender molding or injection molding. These excellent characteristics are attained by synergistic actions of the respective components. The paint adhesion and the bondability to resins or metals are especially improved by incorporation of components (c) and (d), and the composition is preferably used for non-primer coating of a molded article, production of laminates and coating of metals. These effects will become apparent from the examples given hereinafter.

Furthermore, a laminate comprising the composition of the present invention is lighter in weight than, for example, soft polyvinyl chloride. Stickiness caused by a plasticizer is prevented and excellent heat resistance and dimension stability are attained. Accordingly, a laminate of the present invention can be effectively used for comprising the composition interior automotive trims, sealing materials, furniture, construction materials, housings of household electric appliances, bags, sport goods and office supplies.

The present invention will now be described in further detail in the following Examples.

Molding conditions adopted in the Examples for obtaining test samples from the elastomers prepared in the Examples and methods for testing the samples are described below.

(1) Injection molding

| | |
|---|---|
| Molding machine: | Dina Melter (supplied by Meiki Seisakusho) |
| Injection pressure: | 1000 kg/cm$^2$ (primary pressure), 700 kg/cm$^2$ (secondary pressure) |
| Molding temperature: | 220°C |
| Injection speed: | maximum |
| Molding speed: | 90 s/cycle |
| Gate: | direct gate (land length = 10 mm, width = 10mm, thickness = 3 mm) |
| Molded article: | length = 150 mm, width = 120 mm, thickness = 3 mm |

(2) Injection molding

T-die sheets were extrusion-molded under following conditions.

| | |
|---|---|
| Molding machine: | 40 mm-diameter extruder (supplied by Toshiba Kikai) |
| Screw: | full-flight type, L/D = 28, CR = 3.5 |
| Screen bag: | two 80-mesh bags |
| Molding temperature: | 160°C on hopper side, 210°C on die side |

| Die: | coat hunger type |
|------|------------------|
| Die lip: | 1.5 mm |
| Take-out speed: | 5 m/min |

(3) Basic properties

Thermoplastic elastomer

A test piece was punched out from a square board having a thickness of 3 mm, which was obtained by injection molding as described in (1) above, and the basic properties were measured according to the following methods.

| Tensile characteristics: | the stress (M100) at elongation of 100%, the tensile strength (Tb) and the elongation (Eb) at break were measured according to the method of JIS K-6301. |
|------|------|
| Spring hardness (Hs): | measured by method A of JIS K-6301 and Shore D method of ASTM D-2240. |
| Initial flexural modulus (FM): | measured according to method of ASTM D-790. |
| Permanent set (PS): | the residual elongation at 100% elongation was measured according to method of JIS K-6301. |
| Softening point (SP): | the temperature at which a needle having a diameter of 0.8 mm penetrated in 0.1 mm in the sample was measured at a temperature-elevating rate of 20°C/min under a load of 49 g by TMA measuring apparatus supplied by du Pont. |

(4) Peeling strength of coating

A. Preparation of sample

A urethane paint (polyol-isocyanate two-liquid type urethane paint)(R-271 supplied by Nippon Paint) was coated at a thickness of 35 to 40 μm on a molded article of the thermoplastic elastomer composition of the present invention.

B. Peeling test

| Test piece: | strip having a width of 25 mm and a length of 100 mm |
|------|------|
| Test method: | 180° peeling |
| Pulling speed: | 25 mm/min |
| Bonding strength: | value (kg/cm) obtained by dividing the peeling load by the width of the test piece (breaking of the base material is indicated by "breaking of base"). |

(5) Bonding strength

A. Preparation of test piece

An extrusion sheet (having a thickness of 1.0 mm) formed from the elastomer composition under the conditions described in (2) above was press-molded to an adherend having a thickness of 0.5 mm (mold-clamping pressure = 5 tons) to obtain a test piece having a size of 150 mm x 150 mm. The following adherends were used.

| Nylon: | nylon 6 (Amilan CM1021 supplied by Toray) Polyurethane: P26 SRNAT supplied by Nippon Polyurethane |
|------|------|
| Steel sheet: | SS-41 supplied by Nippon Test Panel (treated by sand blasting and having a surface roughness of 30 microns) |

B. Peeling test

| Test piece: | strip having a width of 25 mm and a length of 100 mm |
|------|------|
| Test method: | 180°C peeling |
| Pulling speed: | 25 mm/min |
| Bonding strength: | value (kg/cm) obtained by dividing the peeling load by the width of the test piece (breaking of the base material is indicated by "breaking of base") |

In the present invention, the content ratio between components (a) and (b) in the thermoplastic elastomer composition can be determined by the DSC method and/or the infrared adsorption analysis method. The contents of components (e) and (f) in the composition can be determined by the solvent extraction method (Soxhlet extraction method using acetone as the solvent) and/or the infrared adsorption analysis method. The content between component (g) and the organic components can be determined by the thermogravimetric analysis method.

The contents of grafted components (c) and (d) can be determined by the infrared adsorption analysis method or the chemical analysis method.

Example 1

A blend was prepared by stirring 70 parts by weight of a pelletized ethylene/propylene/5-ethylidene-2-norbornene copolymer (ethylene content = 78 mole%, iodine value = 10, Mooney viscosity $ML_{1+4}$ (100°C) = 160, expanded oil amount = 20% by weight; hereinafter referred to as "EPDM (4)"), 50 parts by weight of polypropylene [melt flow rate (ASTM-D-1238-65T, 230°C) = 13, density = 0.91 $g/cm^3$ ; hereinafter referred to as "PP"], 1.0 part by weight of allylamine (hereinafter referred to as "ANN"), 0.5 part by weight of divinylbenzene (hereinafter referred to as "DVB") and 0.3 part by weight of 1,3-bis(t-butylperoxyisopropyl)-benzene [hereinafter referred to as "peroxide (A)"] by a Henschel mixer, and the blend was extruded at 220°C in a nitrogen atmosphere by using a twin-screw extruder having an L/D ratio of 44 and a screw diameter of 53 mm to prepare a thermoplastic elastomer composition.

Examples 2 through 4

Thermoplastic elastomer compositions were prepared in the same manner as described in Example 1 except that the amounts incorporated of ANN, DVB and peroxide (A) were changed.

Example 5

A thermoplastic elastomer composition was prepared in the same manner as described in Example 1 except that 1.0 part by weight of acrylamide (AAD) was used instead of ANN.

Example 6

A thermoplastic elastomer composition was prepared in the same manner as described in Example 1 except that the amounts incorporated of EPDM (4) and PP were changed.

Examples 7 through 9

Thermoplastic elastomer compositions were prepared in the same manner as described in Example 6 except that the amounts incorporated of ANN, DVB and peroxide (A) were changed.

Example 10

A thermoplastic elastomer composition was prepared in the same manner as described in Example 6 except that 1.0 part by weight of AAD was used instead of ANN.

Comparative Example 1 and 2

The procedures of Examples 1 and 6 were repeated in the same manner except that ANN was not added.

Example 11

A blend was prepared by stirring 90 parts by weight of EPDM (4), 30 parts by weight of PP, 10 parts by weight of a butyl rubber, II R-065 supplied by Esso, unsaturation degree = 0.8% (hereinafter referred to as "IIR"), 10 parts by weight of the oil, 1.0 part by weight of ANN, 0.7 part by weight of DVB and 0.5 part by weight of peroxide (A) by a Henschel mixer, and the blend was extruded at 220°C in a nitrogen atmosphere by a twin-screw extruder to form a thermoplastic elastomer composition.

Examples 12 through 14

Thermoplastic elastomer compositions were prepared in Example 11 except that the amounts incorporated of ANN, DVB and peroxide (A) were changed.

Example 15

A thermoplastic elastomer composition was prepared in the same manner as described in Example 11 except that 1.0 part by weight AAD was used instead of ANN.

Comparative Example 3

The procedures of Example 11 were repeated in the same manner except that ANN was not added.

Example 16

A blend was prepared by stirring 70 parts by weight of EPDM (4), 50 parts by weight of PP, 1.0 parts by weight of ANN, 0.7 part by weight of DVB and 0.5 part by weight of peroxide (A) by a Henschel mixer, and the blend was extruded at 220°C in a nitrogen atmosphere by a twin-screw extruder (first step).

A blend was prepared by stirring 100 parts by weight of the square pellet of the above composition with 10 parts by weight of potassium titanate fibers by a Henschel mixer, and the blend was extruded at 220°C in a nitrogen atmosphere by a twin-screw extruder (second step).

Examples 17 and 18

Thermoplastic elastomer compositions were prepared in the same manner as described in Example 16 except that the amount incorporated of the potassium titanate fibers was changed.

Examples 19 through 21

Thermoplastic elastomer compositions were prepared in the same manner as described in Example 16 except that the amounts incorporated of ANN, DVB and peroxide (A) were changed.

Example 22

A thermoplastic elastomer composition was prepared in the same manner as described in Example 16 except that 1.0 part by weight of AAD was used instead of ANN.

Comparative Example 4

The procedures of Example 16 were repeated in the same manner except that ANN was not added.

Example 23

A thermoplastic elastomer composition was prepared in the same manner as described in Example 16 except that the amounts incorporated of EPDM (4) and PP were changed.

Examples 24 and 25

Thermoplastic elastomer compositions were prepared in the same manner as described in Example 23 except that the amount incorporated of the potassium titanate fibers was changed.

Examples 26 through 28

Thermoplastic elastomer compositions were prepared in the same manner as described in Example 23 except that the amounts incorporated of ANN, DVB and peroxide (A) were changed.

Example 29

A thermoplastic elastomer composition was prepared in the same manner as described in Example 23 except that 1.0 part by weight of ADD was used instead of ANN.

Example 30

A blend was prepared by blending 40 parts by weight of EPDM (4), 60 parts by weight of PP, 10 parts by weight of IIR, 10 parts by weight of the oil, 1.0 part by weight of ANN, 0.7 part by weight of DVB and 0.5 part by weight of peroxide (A) by a Henschel mixer, and the blend was extruded at 220°C in a nitrogen atmosphere by a twin-screw extruder (first step).

A blend was prepared by stirring 100 parts by weight of the square pellet of the above composition with 10 parts by weight of potassium titanate fibers by a Henschel mixer and the blend was extruded at 220°C in a nitrogen atmosphere by a twin-screw extruder (second step).

Examples 31 and 32

Thermoplastic elastomer compositions were prepared in the same manner as described in Example 30 except that the amount incorporated of the potassium titanate fibers was changed.

Examples 33 through 35

Thermoplastic elastomer compositions were prepared in the same manner as described in Example 30 except that the amounts incorporated of ANN, DVB and peroxide (A) were changed.

Example 36

A thermoplastic elastomer composition was prepared in the same manner as described in Example 30 except that 1.0 part by weight of AAD was used instead of ANN.

Comparative Example 5

A thermoplastic elastomer composition was prepared in the same manner as described in Example 30 except that ANN was not added.

Example 37

In a nitrogen atmosphere, 70 parts by weight of an ethylene/propylene/5-ethylidene-2-norbornene copolymer rubber [ethylene content = 70 mole%, iodine value = 15, Mooney viscosity $ML_{1+4}$ (100°C) = 120; hereinafter referred to as "EPDM(1)"] was kneaded with 30 parts by weight of PP at 190°C for 5 minutes, and the kneaded mixture was passed through rolls and formed into a square pellet by a sheet cutter (first step).

A blend was prepared by stirring 100 parts by weight of the square pellet with 1.0 part by weight of ANN, 0.7 part by weight of DVB and 0.5 part by weight of peroxide (A) by a Henschel mixer, and the blend was extruded at 220°C in a nitrogen atmosphere by a Henschel mixer to prepare a thermoplastic elastomer composition (second step).

Example 38

In the same manner as described in Example 37, a square pellet was prepared from 70 parts by weight of EPDM (1), 30 parts by weight of PP, 10 parts by weight of IIR and 30 parts by weight of the oil (first step).

Then, in the same manner as described in Example 139, a thermoplastic elastomer composition was prepared from 100 parts by weight of the above square pellet, 1.0 part by weight of ANN, 0.7 part by weight of DVB and 0.5 part by weight of peroxide (A) (second step).

Example 39

In the same manner as described in Example 37, a square pellet was prepared from 20 parts by weight of EPDM (1), 60 parts by weight of PP, 10 parts by weight of IIR, 10 parts by weight of the oil and 10 parts by weight of potassium titanate fibers (first step)

In the same manner as described in Example 37, a thermoplastic elastomer composition was prepared from 100 parts by weight of the obtained pellet, 1.0 part by weight of ANN, 0.7 part by weight of DVB and 0.5 part by weight of peroxide (A) (second step).

Example 40

A blend was prepared by stirring 100 parts by weight of polypropylene (ethylene content = 11 mole%, melt flow rate (ASTM D 123B, 230°C = 25, density = 0.91 g/cm$^3$, hereinafter referred to as "PP(1)"), 1.0 part by weight of ANN, 0.1 part by weight of DVB and 0.06 part by weight of peroxide (A) by a Henschel mixer, and the blend was extruded at 220°C in a nitrogen atmosphere by a twin-screw extruder (first step).

Then, a blend was prepared by stirring 100 parts by weight of the formed square pellet of the above composition, 0.5 part by weight of maleic anhydride (hereinafter referred to as "MAH"), 0.05 part by weight of DVB and 0.03 part by weight of peroxide (A) by a Henschel mixer, and the blend was extruded at 220°C in a nitrogen atmosphere by a twin-screw extruder (second step).

Then, a blend was prepared by stirring 100 parts by weight of the obtained square pellet of the above composition and the blend was extruded at 220°C in a nitrogen atmosphere by a twin-screw extruder (third step).

Example 43

A blend was prepared by stirring 70 parts by weight of EPDM (4), 50 parts by weight of PP, 1.0 part by weight of ANN, 0.7 part by weight of DVB and 0.5 part by weight of peroxide (A) by a Henschel mixer, and the blend was extruded at 220°C in a nitrogen atmosphere (first step).

Then, a blend was prepared by stirring 100 parts by weight of the formed pellet of the above composition 0.5 part by weight of MAH 0.05 part by weight of DVB and 0.03 part by weight of peroxide (A), and the blend was extruded at 220°C in a nitrogen atmosphere by a twin-screw extruder (second step).

Example 44

A thermoplastic elastomer was prepared in the same manner as described in Example 43 except that 1.0 part by weight of AAD was used instead of ANN.

Example 45

A blend was prepared by stirring 90 parts by weight of EPDM (4), 30 parts by weight of PP, 10 parts by weight of IIR, 10 parts by weight of a paraffinic process oil, 1.0 part by weight of ANN, 0.7 part by weight of DVB and 0.5 part by weight of peroxide (A), and the blend was extruded at 220°C in a nitrogen atmosphere by a twin-screw extruder to prepare a thermoplastic elastomer composition (first step).

A blend was prepared by stirring 100 parts by weight of the obtained square pellet by the above composition with 0.5 part by weight of MAH, 0.05 part by weight of DVB and 0.03 part by weight of peroxide (A) by a Henschel mixer, and the mixture was extruded at 220°C in a nitrogen atmosphere by a twin-screw extruder (second step).

Example 46

A blend was prepared by stirring 70 parts by weight of EPDM (4), 50 parts by weight of PP, 1.0 part by weight of ANN, 0.7 part by weight of DVB and 0.5 part by weight of peroxide (A) by a Henschel mixer, and the blend was extruded at 220°C in a nitrogen atmosphere by a twin-screw extruder (first step).

Then, a blend was prepared by stirring 100 parts by weight of the square pellet of the above composition with 0.5 part by weight of MAH, 0.05 part by weight of DVB and 0.03 part by weight of peroxide (A) by a Henschel mixer, and the blend was extruded at 220°C in a nitrogen atmosphere by a twin-screw extruder (second step).

Then, a blend was prepared by stirring the obtained square pellet of the above composition with 10 parts by weight of potassium titanate fibers, and the blend was extruded at 220°C in a nitrogen atmosphere by a twin-screw extruder (third step).

Example 47

A blend was prepared by stirring 90 parts by weight of EPDM (4), 30 parts by weight of PP, 10 parts by weight of IIR, 10 parts by weight of a paraffinic process oil, 1.0 part by weight of ANN, 0.7 part by weight of DVB and 0.5 part by weight of peroxide (A) by a Henschel mixer, and the blend was extruded at 220°C in a nitrogen atmosphere by a twin-screw extruder to obtain a thermoplastic elastomer composition (first step).

Then, a blend was prepared by stirring 100 parts by weight of the obtained square pellet with 0.5 part by weight of MAH, 0.05 part by weight of DVB and 0.03 part by weight of a Henschel mixer, and the blend was extruded at 220°C in a nitrogen atmosphere by a twin-screw extruder (second step).

Then, a blend was prepared by stirring 100 parts by weight of the obtained square pellet having the above composition with 10 parts by weight of a potassium titanate fiber by a Henschel mixer, and the blend was extruded at 220°C by a twin-screw extruder in a nitrogen atmosphere by a twin-screw extruder (third step).

The results obtained in Examples 1 through 47 and Comparative Examples 1 through 4 are shown in Tables 1 through 7.

Table 1

| | E1 | E2 | E3 | E4 | E5 | E6 | E7 | E8 | E9 | E10 | R1 | R2 |
|---|---|---|---|---|---|---|---|---|---|---|---|---|
| **Composition** | | | | | | | | | | | | |
| EPDM (4)* | 70 | 70 | 70 | 70 | 70 | 90 | 90 | 90 | 90 | 90 | 70 | 90 |
| PP | 50 | 50 | 50 | 50 | 50 | 30 | 30 | 30 | 30 | 30 | 50 | 30 |
| ANN | 1.0 | 0.3 | 0.5 | 2.0 | - | 1.0 | 0.3 | 0.5 | 2.0 | - | - | - |
| AAD | - | - | - | - | 1.0 | - | - | - | - | 1.0 | - | 1.0 |
| DVB | 0.7 | 0.4 | 0.5 | 0.8 | 0.7 | 0.7 | 0.4 | 0.5 | 0.8 | 0.7 | 0.7 | 0.7 |
| peroxide(A) | 0.5 | 0.2 | 0.3 | 0.6 | 0.5 | 0.5 | 0.2 | 0.3 | 0.6 | 0.5 | 0.5 | 0.5 |
| **Basic Physical Properties** | | | | | | | | | | | | |
| $M_{100}$ (kgf/cm$^2$) | 75 | 74 | 75 | 73 | 75 | 42 | 41 | 41 | 43 | 40 | 70 | 38 |
| $T_B$ (kgf/cm$^2$) | 160 | 162 | 165 | 160 | 162 | 105 | 102 | 103 | 108 | 104 | 152 | 99 |
| $E_B$ (%) | 630 | 620 | 635 | 630 | 625 | 580 | 575 | 577 | 585 | 575 | 620 | 570 |
| $H_S$ JIS A | - | - | - | - | - | 82 | 81 | 81 | 82 | 82 | - | 81 |
| $H_S$ shore D | 38 | 37 | 37 | 38 | 37 | - | - | - | - | - | 36 | - |
| $P_S$ (%) | - | - | - | - | - | 20 | 19 | 19 | 19 | 19 | - | 17 |
| FM (kgf/cm$^2$) | 2600 | 2600 | 2600 | 2700 | 2600 | - | - | - | - | - | 2600 | - |
| SP (°C) | 147 | 145 | 146 | 145 | 146 | 137 | 137 | 137 | 136 | 137 | 146 | 135 |
| gel content | 60 | 61 | 60 | 62 | 61 | 94 | 93 | 93 | 95 | 94 | 61 | 93 |
| **Bonding Strength** | | | | | | | | | | | | |
| peeling strength to urethane coating (g/cm) | 900 | 920 | 980 | 990 | 900 | 910 | 890 | 900 | 940 | 880 | below 0.1 | below 0.1 |
| bonding strength to nylon (kg/cm) | 7.5 | 7.3 | 7.4 | 7.9 | 7.5 | 7.2 | 7.1 | 7.2 | ** | 7.2 | 7.2 | below 0.1 |
| bonding strength to polyurethane (kg/cm) | 1.2 | 1.1 | 1.1 | 1.3 | 1.2 | 1.1 | 0.9 | 1.0 | 1.2 | 1.0 | below 0.1 | below 0.1 |
| bonding strength to steel sheet (kg/cm) | 6.5 | 6.3 | 6.2 | 6.4 | 6.4 | 6.2 | 6.1 | 6.1 | ** | 5.9 | below 0.1 | below 0.1 |

* : EPDM in which the expanded oil amount was 20 parts by weight    **: breaking of substrate

Table 2

| | E11 | E12 | E13 | E14 | E15 | R3 |
|---|---|---|---|---|---|---|
| **Composition** | | | | | | |
| EPDM (4)* | 90 | 90 | 90 | 90 | 90 | 90 |
| PP | 30 | 30 | 30 | 30 | 30 | 30 |
| IIR | 10 | 10 | 10 | 10 | 10 | 10 |
| oil | 10 | 10 | 10 | 10 | 10 | 10 |
| ANN | 1.0 | 0.3 | 0.5 | 2.0 | - | - |
| AAD | - | - | - | - | 1.0 | - |
| DVB | 0.7 | 0.4 | 0.5 | 0.8 | 0.7 | 0.7 |
| peroxide(A) | 0.5 | 0.2 | 0.3 | 0.6 | 0.5 | 0.5 |
| **Basic Physical Properties** | | | | | | |
| $M_{100}$ (kgf/cm$^2$) | 26 | 25 | 26 | 27 | 26 | 25 |
| $T_B$ (kgf/cm$^2$) | 82 | 81 | 81 | 83 | 82 | 75 |
| $E_B$ (%) | 635 | 640 | 640 | 630 | 635 | 645 |
| $H_S$ JIS A | 65 | 64 | 64 | 64 | 65 | 65 |
| $P_S$ (%) | 9 | 8 | 8 | 10 | 9 | 8 |
| SP (°C) | 120 | 121 | 121 | 121 | 121 | 120 |
| gel content | 96 | 96 | 96 | 97 | 96 | 95 |
| **Bonding Strength** | | | | | | |
| peeling strength to urethane coating (g/cm) | 930 | 920 | 920 | 940 | 900 | below 0.1 |
| bonding strength to nylon (kg/cm) | 7.1 | 7.1 | 7.0 | 7.1 | 7.1 | below 0.1 |
| bonding strength to polyurethane (kg/cm) | 1.2 | 1.2 | 1.2 | 1.3 | 0.9 | below 0.1 |
| bonding strength to steel sheet (kg/cm) | 6.5 | 6.4 | 6.4 | 6.6 | 5.8 | below 0.1 |

* : EPDM in which the expanded oil amount was 20 parts by weight

Table 3

| | E16 | E17 | E18 | E19 | E20 | E21 | E22 | R4 | E23 | E24 | E25 | E26 | E27 | E28 | E29 |
|---|---|---|---|---|---|---|---|---|---|---|---|---|---|---|---|
| **Composition** | | | | | | | | | | | | | | | |
| EPDM (4)* | 70 | 70 | 70 | 70 | 70 | 70 | 70 | 70 | 90 | 90 | 90 | 90 | 90 | 90 | 90 |
| PP | 50 | 50 | 50 | 50 | 50 | 50 | 50 | 50 | 30 | 30 | 30 | 30 | 30 | 30 | 30 |
| ANN | 1.0 | 1.0 | 1.0 | 0.3 | 0.5 | 2.0 | – | – | 1.0 | 1.0 | 1.0 | 0.3 | 0.5 | 2.0 | – |
| AAD | – | – | – | – | – | – | 1.0 | – | – | – | – | – | – | – | 1.0 |
| DVB | 0.7 | 0.7 | 0.7 | 0.4 | 0.5 | 0.8 | 0.7 | 0.7 | 0.7 | 0.7 | 0.7 | 0.4 | 0.5 | 0.8 | 0.7 |
| peroxide(A) | 0.5 | 0.5 | 0.5 | 0.2 | 0.3 | 0.6 | 0.5 | 0.5 | 0.5 | 0.5 | 0.5 | 0.2 | 0.3 | 0.6 | 0.5 |
| potassium titanate fibers | 10 | 20 | 30 | 10 | 10 | 10 | 10 | 10 | 10 | 20 | 30 | 10 | 10 | 10 | 10 |
| **Basic Physical Properties** | | | | | | | | | | | | | | | |
| $M_{100}$ (kgf/cm$^2$) | 90 | 98 | 110 | 91 | 91 | 92 | 89 | 95 | 76 | 91 | 122 | 75 | 78 | 82 | 77 |
| $T_B$ (kgf/cm$^2$) | 180 | 187 | 210 | 178 | 180 | 182 | 180 | 130 | 150 | 195 | 225 | 130 | 128 | 135 | 148 |
| $E_B$ (%) | 560 | 500 | 480 | 565 | 560 | 560 | 558 | 250 | 510 | 450 | 410 | 500 | 505 | 490 | 500 |
| $H_S$ Shore D hardness | 43 | 44 | 48 | 44 | 44 | 43 | 44 | 44 | 38 | 41 | 45 | 37 | 38 | 40 | 40 |
| gel content | 55 | 55 | 56 | 55 | 55 | 55 | 56 | 55 | 78 | 77 | 78 | 77 | 77 | 78 | 77 |
| **Peeling Strength to Urethane Coating (g/cm)** | 890 | 870 | 840 | 850 | 860 | 920 | 850 | below 0.1 | 870 | 850 | 830 | 870 | 870 | 910 | 810 |
| **Other Physical Properties** | | | | | | | | | | | | | | | |
| heat resistance: heat sag (120°C)(mm) | 5 | 2 | 2 | 5 | 5 | 6 | 6 | 11 | 8 | 4 | 3 | 8 | 8 | 8 | 8 |
| cold resistance: Izod impact strength (-20°C)(kg·cm/cm) | NB | NB | 27 | NB | NB | NB | NB | NB | NB | NB | 22 | NB | NB | NB | NB |
| shape stability: initial flexural strength (kgf/cm$^2$) | 3500 | 4200 | 5100 | 3400 | 3500 | 3700 | 3500 | 3500 | 2700 | 3600 | 4500 | 2700 | 2700 | 2600 | 2700 |
| dimension stability: linear expansion coefficient ($\times10^{-6}$)(mm/mm/°C) | 90 | 70 | 60 | 90 | 90 | 90 | 90 | 140 | 90 | 70 | 60 | 90 | 90 | 90 | 90 |

*2: NB = not broken

* : EPDM in which the expanded oil amount was 20 parts by weight

Table 4

|  | E30 | E31 | E32 | E33 | E34 | E35 | E36 | E37 |
|---|---|---|---|---|---|---|---|---|
| **Composition** | | | | | | | | |
| EPDM (4)* | 40 | 40 | 40 | 40 | 40 | 40 | 40 | 40 |
| PP | 60 | 60 | 60 | 60 | 60 | 60 | 60 | 60 |
| IIR | 10 | 10 | 10 | 10 | 10 | 10 | 10 | 10 |
| oil | 10 | 10 | 10 | 10 | 10 | 10 | 10 | 10 |
| ANN | 1.0 | 1.0 | 1.0 | 0.3 | 0.5 | 2.0 | – | – |
| AAD | – | – | – | – | – | – | 1.0 | – |
| DVB | 0.7 | 0.7 | 0.7 | 0.4 | 0.5 | 0.8 | 0.7 | 0.7 |
| peroxide(A) | 0.5 | 0.5 | 0.5 | 0.2 | 0.3 | 0.6 | 0.5 | 0.5 |
| potassium titanate fibers | 10 | 20 | 30 | 10 | 10 | 10 | 10 | 10 |
| **Basic Physical Properties** | | | | | | | | |
| $M_{100}$ (kgf/cm$^2$) | 120 | 132 | 190 | 121 | 120 | 125 | 119 | 125 |
| $T_B$ (kgf/cm$^2$) | 215 | 235 | 270 | 213 | 212 | 218 | 210 | 220 |
| $E_B$ (%) | 610 | 530 | 500 | 605 | 608 | 600 | 613 | 600 |
| $H_S$ Shore D hardness | 50 | 53 | 57 | 51 | 50 | 52 | 50 | 50 |
| gel content | 47 | 46 | 46 | 47 | 47 | 47 | 47 | 47 |
| **Peeling Strength to Urethane Coating (g/cm)** | 860 | 820 | 800 | 840 | 845 | 890 | 805 | below 0.1 |
| **Other Physical Properties** | | | | | | | | |
| heat resistance: heat sag (120°C)(mm) | 4 | 3 | 2 | 4 | 4 | 4 | 4 | 10 |
| cold resistance: Izod impact strength (-20°C)(kg·cm/cm) | NB*3 | NB*3 | 27.5 | NB*3 | NB*3 | NB*3 | NB*3 | NB*3 |
| Shape stability: initial flexural strength (kgf/cm$^2$) | 4600 | 5000 | 5700 | 4600 | 4600 | 4700 | 4600 | 4400 |
| dimension stability: linear expansion coefficient (x10$^{-6}$)(mm/mm/°C) | 90 | 80 | 70 | 90 | 90 | 90 | 90 | 140 |

*: EPDM inwhich the expanded oil amount was 20 parts by weight

*3: NB = not broken

EP 0 614 940 B1

Table 5

|  | E37 | E38 | E39 |
|---|---|---|---|
| **Composition** | | | |
| EPDM (1) | 70 | 70 | 20 |
| PP | 30 | 30 | 60 |
| IIR | - | 10 | 10 |
| oil | - | 30 | 10 |
| ANN | 1.0 | 1.0 | 1.0 |
| DVB | 0.7 | 0.7 | 0.7 |
| peroxide(A) | 0.5 | 0.5 | 0.5 |
| potassium titanate fibers | - | - | 10 |
| **Basic Physical Properties** | | | |
| $M_{100}$ (kgf/cm$^2$) | 45 | 27 | 120 |
| $T_B$ (kgf/cm$^2$) | 105 | 80 | 225 |
| $E_B$ (%) | 580 | 620 | 600 |
| $H_S$ JIS A | 82 | 65 | shore D hardness 50 |
| $P_S$ (%) | 18 | 9 | - |
| gel content | 96 | 97 | 47 |
| Peeling Strength to Urethane Coating (g/cm) | 890 | 870 | 890 |
| **Other Physical Properties** | | | |
| heat resistance: heat sag (120°C)(mm) | - | - | 4 |
| cold resistance: Izod impact strength*4(-20°C)(kg·cm/cm) | - | - | NB |
| Shape stability: initial flexural strength (kgf/cm$^2$) | - | - | 4500 |
| dimension stability: linear expansion coefficient (x10$^{-6}$)(mm/mm/°C) | - | - | 90 |

*4: NB = not broken

Table 6

|  |  | E40 | E41 | E42 |
|---|---|---|---|---|
| **Composition** | | | | |
| first step | PP (1) | 100 | 100 | 100 |
|  | ANN | 1.0 | - | 1.0 |
|  | AAD | - | 1.0 | - |
|  | DVB | 0.1 | 0.1 | 0.1 |
|  | peroxide(A) | 0.06 | 0.06 | 0.06 |
| seconp step | MAH | 0.5 | 0.5 | 0.5 |
|  | DVB | 0.05 | 0.05 | 0.05 |
|  | peroxide(A) | 0.03 | 0.03 | 0.03 |
| potassium titanate fibers | | - | - | 10 |
| **Basic Physical Properties** | | | | |
| stress at yield point (kgf/cm$^2$) 370 | | | 365 | 400 |
| tensile strength at break (kgf/cm$^2$) | | 250 | 255 | 295 |
| elongation at break (%) | | 460 | 460 | 4 |
| initial flexural modulus (kgr/cm$^2$) | | 16.000 | 16.000 | 45.000 |
| **Bonding Strength** | | | | |
| peeling strength to urethane coating (g/cm) | | 900 | 880 | 860 |

Table 6 (continued)

| | | E40 | E41 | E42 |
|---|---|---|---|---|
| Bonding Strength | | | | |
| bonding strength to nylon (kg/cm) | | * | * | - |
| bonding strength to polyurethane (kg/cm) | | 1.7 | 1.7 | - |
| bonding strength to steel sheet (kg/cm) | | * | * | - |
| Linear Expansion Coefficient ($\times 10^{-6}$)(mm/mm/°C) | | - | - | 80 |

* breaking of substrate

Table 7

| Composition | E43 | E44 | E45 | E46 | E47 |
|---|---|---|---|---|---|
| first step | | | | | |
| EPDM (4) | 70 | 70 | 90 | 70 | 90 |
| PP | 50 | 50 | 30 | 50 | 30 |
| ANN | 1.0 | - | 1.0 | 1.0 | 1.0 |
| AAD | - | 1.0 | - | - | - |
| DVB | 0.7 | 0.7 | 0.7 | 0.7 | 0.7 |
| peroxide (A) | 0.5 | 0.5 | 0.5 | 0.5 | 0.5 |
| IIR | - | - | 10 | - | 10 |
| oil | - | - | 10 | - | 10 |
| second step | | | | | |
| MAH | 0.5 | 0.5 | 0.5 | 0.5 | 0.5 |
| DVB | 0.05 | 0.05 | 0.05 | 0.05 | 0.05 |
| peroxide (A) | 0.03 | 0.03 | 0.03 | 0.03 | 0.03 |
| potassium titanate fibers | - | - | - | 10 | 10 |
| | | | | | |
| Basic physical properties | | | | | |
| $M_{100}$ (kgf/cm$^2$) | 70 | 72 | 26 | 92 | 75 |
| $T_B$ (kgf/cm$^2$) | 155 | 157 | 80 | 180 | 157 |
| $E_B$ (%) | 630 | 630 | 640 | 565 | 514 |
| $H_s$ | shoreD 39 | shoreD 40 | JIS A 66 | shoreD 44 | shoreD 38 |
| $P_s$ (%) | - | - | 12 | - | - |
| gel content | 60 | 60 | 96 | 55 | 79 |
| Initial Flexural Modulus (Kgf/cm$^2$) | 2600 | 2600 | - | 3600 | 2700 |
| Bonding strength | | | | | |
| peeling strength to urethane coating (g/cm) | 900 | 850 | 890 | 900 | 910 |
| bonding strength to nylon (kg/cm) | 8.2 | 8.1 | 8.1 | - | - |
| bonding strength to polyurethane (kg/cm) | 1.6 | 1.5 | 1.6 | - | - |
| bonding strength to steel sheet (kg/cm) | 7.3 | 7.1 | 7.2 | - | - |
| Linear Expression Coefficient ($\times 10^{-6}$)(mm/mm/°C) | - | - | - | 80 | 80 |

Example 48

A blend was prepared by stirring 50 parts by weight of a pelletized ethylene/propylene copolymer (ethylene content = 80 mol%; hereinafter referred to as "EPR"), 50 parts by weight of PP, 1.0 part by weight of ANN, 0.12 part by weight of DVB and 0.06 part by weight of peroxide (A) by a Henschel mixer, and the blend was extruded at 220°C in a nitrogen atmosphere by a twin-screw extruder having an L/D ratio of 44 and a screw diameter of 53 mm to prepare a thermoplastic elastomer composition.

Example 49

A thermoplastic elastomer composition was prepared in the same manner as described in Example 48 except that 70 parts by weight of EPDM (4) was used instead of EPR.

The results obtained in Examples 48 and 49 are shown in Table 8.

Table 8

| | E48 | E49 |
|---|---|---|
| Composition | | |
| EPR | 50 | - |
| EPDM (4) | - | 70 |
| PP | 50 | 50 |
| ANN | 1.0 | 1.0 |
| DVB | 0.12 | 0.12 |
| peroxide (A) | 0.06 | 0.06 |
| Basic Physical Properties | | |
| $M_{100}$ (kgr/cm$^2$) | 50 | 55 |
| $T_B$ (kgf/cm$^2$ | 123 | 118 |
| $E_B$ (%) | 350 | 400 |
| $H_S$ Shore D | 35 | 40 |
| FM (kgf/cm$^2$) | 1900 | 2400 |
| gel content | 1.5 | 2.0 |
| Bonding Strength | | |
| peeling strength to urethane coating (g/cm) | 910 | 900 |
| bonding strength to nylon (kg/cm) | 7.2 | 7.1 |
| bonding strength to polyurethane (kg/cm) | 1.2 | 1.2 |
| bonding strength to steel sheet (kg/cm) | 6.4 | 6.1 |

**Claims**

1. A thermoplastic elastomer composition which is obtainable by a process comprising dynamically heat-treating, in the presence of an organic peroxide, a blend comprising 100 parts by weight in total of components (a) and (b) with component (d)
   wherein

   component (a) is a peroxide-crosslinkable olefin-type polymer
   component (b) is an olefin-type plastic
   and component (d) is 0.01 to 10 parts by weight of monomer containing at least one amino group.

2. A composition according to claim 1 obtainable by dynamically heat treating, in the presence of an organic peroxide, a blend of 100 parts by weight of components (a) and (b) with component (d) and blending under heat the dynamically heat treated product with component (c) which is 0.01 to 10 parts by weight of an unsaturated carboxylic acid or an ester of anhydride thereof.

3. A composition according to claim 1 or 2 wherein the blend to be dynamically heat treated further comprises at least one of components (e), (f) and (g) :
   wherein

   component (e)    is 0.01 to 100 parts by weight of a peroxide-noncrosslinkable rubbery substance,

component (f)    is 0.01 to 200 parts by weight of a mineral oil type softener, and

component (g)    is 0.01 to 100 parts by weight of a fibrous filler.

4. A composition according to any one of claims 1 to 3 wherein (c) is maleic anhydride.

5. A composition according to any one of claims 1 to 4 wherein component (d) is allylamine or acrylamide.

6. A process for producing a thermoplastic elastomer composition which process comprises dynamically heat-treating, in the presence of an organic peroxide, a blend comprising 100 parts by weight in total of components (a) and (b) with component (d) wherein components (a), (b) and (d) are as defined in claim 1 or 5.

7. A process according to claim 6 comprising dynamically heat treating, in the presence of an organic peroxide, a blend of 100 parts by weight of components (a) and (b) with component (d) and blending under heat the dynamically heat treated product with component (c) as defined in claim 2 or 4.


**Patentansprüche**

1. Thermoplastische Elastomermasse, die erhältlich ist nach einem Verfahren, umfassend das dynamische Wärmebehandeln eines Gemisches, umfassend insgesamt 100 Gewichtsteile der Komponenten (a) und (b) mit der Komponente (d), in Gegenwart eines organischen Peroxids,
wobei

die Komponente (a)        ein mit Peroxid vernetzbares Polymer vom Olefintyp ist,
die Komponente (b)        ein Kunststoff vom Olefintyp ist,
und die Komponente (d)    0,01 bis 10 Gewichtsteile Monomer, ent haltend mindestens eine Aminogruppe, ist.

2. Masse nach Anspruch 1, erhältlich durch dynamisches Wärmebehandeln eines Gemisches aus 100 Gewichtsteilen der Komponenten (a) und (b) mit der Komponente (d) in Gegenwart eines organischen Peroxids und Vermischen des dynamisch wärmebehandelten Produktes mit der Komponente (c), die 0,01 bis 10 Gewichtsteile einer ungesättigten carbonsäure oder eines Esters oder Anhydrids davon ist, unter Wärme.

3. Masse nach Anspruch 1 oder 2, wobei das dynamisch wärmezubehandelnde Gemisch ferner mindestens eine der Komponenten (e), (f) und (g) umfaßt,
wobei

die Komponente (e)    0,01 bis 100 Gewichtsteile einer mit Peroxid nicht vernetzbaren kautschukartigen Substanz ist,
Komponente (f)        0,01 bis 200 Gewichtsteile eines Weich machers vom Mineralöltyp ist, und
Komponente (g)        0,01 bis 100 Gewichtsteile eines faserförmigen Füllstoffs ist.

4. Masse nach einem der Ansprüche 1 bis 3, wobei (c) Maleinsäureanhydrid ist.

5. Masse nach einem der Ansprüche 1 bis 4, wobei die Komponente (b) Allylamin oder Acrylamid ist.

6. Verfahren zur Herstellung einer thermoplastischen Elastomermasse, umfassend das dynamische Wärmebehandeln eines Gemisches, umfassend insgesamt 100 Gewichtsteile der Komponenten (a) und (b) mit Komponente (d), in Gegenwart eines organischen Peroxids, wobei die Komponenten (a), (b) und (d) wie in Anspruch 1 oder 5 definiert sind.

7. Verfahren nach Anspruch 6, umfassend das dynamische Wärmebehandeln eines Gemisches aus 100 Gewichtsteilen der Komponenten (a) und (b) mit Komponente (d) in Gegenwart eines organischen Peroxids und Vermischen des dynamisch wärmebehandelten Produktes mit Komponente (c), wie in Anspruch 2 oder 4 definiert.

**Revendications**

1. Composition élastomère thermoplastique que l'on peut obtenir par un procédé comportant le fait de traiter dynamiquement et à chaud, en présence d'un peroxyde organique, un mélange comprenant au total 100 parties en poids des composants (a) et (b), ainsi qu'un composant (d), le composant (a) étant un polymère oléfinique réticulable à l'aide d'un peroxyde, le composant (b) étant une matière plastique oléfinique, et le composant (d) étant de 0,01. à 10 parties en poids d'un monomère comportant au moins un groupe amino.

2. Composition selon la revendication 1 que l'on peut obtenir en traitant dynamiquement et à chaud, en présence d'un peroxyde organique, un mélange de 100 parties en poids des composants (a) et (b) et du composant (c), et en mélangeant à chaud le produit traité dynamiquement et à chaud avec le composant (c) correspondant à 0,01 - 10 parties en poids d'un acide carboxylique insaturé ou d'un ester ou anhydride d'un tel acide.

3. Composition selon la revendication 1 ou 2, dans laquelle le mélange à traiter dynamiquement et à chaud comprend en outre au moins un des composants (e), (f) et (g),

   le composant (e) étant de 0,01 à 100 parties en poids d'une substance caoutchouteuse non réticulable par un peroxyde,
   le composant (f) étant de 0,01 à 200 parties en poids d'un agent plastifiant de type huile minérales et
   le composant (g) étant de 0,01 à 100 parties en poids d'une charge fibreuse.

4. Composition selon l'une quelconque des revendications 1 à 3 dans laquelle le composant (c) est de l'anhydride maléique.

5. Composition selon l'une quelconque des revendications 1 à 4 dans laquelle le composant (d) est l'allylamine ou l'acrylamide.

6. Procédé de préparation d'une composition élastomère thermoplastique comprenant le fait de traiter dynamiquement et à chaud en présence d'un peroxyde organique, un mélange comprenant au total 100 parties en poids des composants (a) et (b) et un composant (d), les composants (a), (b) et (d) étant définis comme dans les revendications 1 ou 5.

7. Procédé selon la revendication 6, comprenant le fait de traiter dynamiquement et à chaud, en présence d'un peroxyde organique, un mélange de 100 parties en poids des composants (a) et (b) et du composant (d) et le fait de mélanger à chaud le produit traité dynamiquement et à chaud avec le composant (c) défini dans la revendication 2 ou 4.